# EUROPEAN PATENT APPLICATION

(11) **EP 3 840 192 A1**
(43) Date of publication of application: **23.06.2021**
(21) Application number: 19020679.7
(22) Date of filing: 16.12.2019
(51) Int. Cl.: H02K 7/18, B60K 16/00, B60L 8/00

(54) **GENERATOR FOR ELECTRIC VEHICLES**

(71) Applicant: Matutis, Vaidotas, 03104 Vilnius (LT); Matutis, Mindaugas, 03114 Vilnius (LT)
(72) Inventor: Matutis, Vaidotas, 03104 Vilnius (LT); Matutis, Mindaugas, 03114 Vilnius (LT)
(74) Representative: Janickaite, Liucija

(57) **Abstract**

The invention is designed to extend the electric vehicle's travel route by a single battery charge at a stationary charging station.

The present invention relates to the conversion of wind energy into electricity. It is a natural, constantly renewable source of energy for our environment, innocuous and environmentally friendly. The process itself does not release any harmful substances into the environment. All materials are naturally occurring in nature and used in the manufacturing process, during operation or after recycling. The present invention is primarily directed to electric vehicles and hybrid cars that have an electric drive and battery for energy storage but can be used much more widely.

The mode of operation of the generator for electric cars, which involves the conversion of wind energy into electricity, the rotor starts to rotate around the stator when the air flow pressure reaches a critical value in the wind turbine, the alternating magnetic field power flows and feeds only part of the power to the battery charging line, returning the other part to the generator to compensate for the loss of power, from the inverter to the battery compartment charging switch, which only charges the battery compartment that is not used to power the vehicle's electric motors for the active battery section supplying the electric motors, the switching element automatically switches the power supply from the previously charged section and the charging line to the discharged section for loading it. The generator stops working when the battery is fully charged or a stationary charge is connected.

Airflow pressure is concentrated in the rotor blades, which results in more efficient energy use by concentrating all the pressure at the blade edge

## Description

### [Technical field]

The present invention is designed to extend the electric vehicle's travel route by a single battery charge at a stationary charging station.

The present invention relates to the conversion of wind energy into electricity. It is a natural, constantly renewable source of energy for our environment, innocuous and environmentally friendly. The process itself does not release any harmful substances into the environment. All materials are naturally occurring in nature and used in the manufacturing process, during operation or after recycling. The present invention is primarily directed to electric vehicles and hybrid cars that have an electric drive and battery for energy storage, but can be used much more widely

### [Background Art]

The increase in the number of cars has led to an increase in fuel consumption, such as petrol, diesel, LPG. However, oil reserves are limited. Accordingly, there is growing concern that if current trends in oil consumption continue, oil resources will be exhausted soon enough. In addition, car exhaust fumes are a major cause of air pollution and affect various environmental aspects, such as global warming.

Power generators are currently known. One of the energy generators is described in Korean Patent Application PCT / KR2010 / 006842. The present invention relates to a wind power generator which can improve the performance of a vehicle battery and / or accumulator. The wind power generator consists of a stator and a rotor, a battery, all elements electrically interconnected in between each other.

### Disclosure

### [Technical problem]

The object of the present invention is to provide a mobile power generator based on environmentally friendly technology with a simple design having a compensating mechanism using wind energy (both kinetic and potential air mass energy generated by the movement of the car). It would be a component of an electric vehicle that charges the battery while the car is in motion. The object of the invention is to provide an environmentally friendly wind power generator capable of generating electricity from a simple structure capable of using wind power.

### [Technical Solution]

Generator for electric vehicles including wind turbine electrically connected to battery, wind turbine mechanism housing permanently connected to stator on main axis and mounted on base, all stator mounted on main axis with fixed inductor coil and stator ring, housing also mounted in rotor, around the stationary main axis and elements mounted thereon, two polarity N and S magnets mounted on the inside of the rotor housing, rotor blades mounted on the outside of the rotor housing to concentrate air flow, inductors in the stator ring to wind outlets turbines connecting it to the inverter while the inverter is connected to a battery compartment switching element between and having a connection to a rechargeable battery section and to an electric power supply battery load section.

The mode of operation of the generator for electric cars, which involves the conversion of wind energy into electricity, the rotor starts to rotate around the stator when the air flow pressure reaches a critical value in the wind turbine, the alternating magnetic field power flows and feeds only part of the power to the battery charging line, returning the other part to the generator to compensate for the loss of power, from the inverter to the battery compartment charging switch, which only charges the battery compartment that is not used to power the vehicle's electric motors for the active battery section supplying the electric motors, the switching element automatically switches the power supply from the previously charged section and the charging line to the discharged this section for loading it. The generator stops working when the battery is fully charged, or a stationary charge is connected.

### [Advantageous Effects]

Airflow pressure is concentrated in the rotor blades, which results in more efficient energy use by concentrating all the pressure at the blade edge.

The present invention seeks to provide an environmentally friendly wind power generator capable of generating electricity from a simple design capable of using wind power.

### [Descriptions of Drawing]

Fig. 1 shows the general layout of the generator for electric cars:
   1 - wind turbine;
   2 - converter;
   3 - battery Charging Switch;
   4 - battery:
      4a - rechargeable battery compartment;
      4b - battery section for electric motors.
Fig. 2 illustrates the construction diagram of an electric generator for a wind turbine:
   5 - base;
   6 - air flow (wind);
   7 - housing (fixed to the base);
   8 - rotor:
      8a - rotor magnets;
      8b - rotor wings;
      8c - rotor housing;
   9 - stator:
      9a - major axis;
      9b - stator inductors;
      9c - stator ring;

### Detailed implementation mode

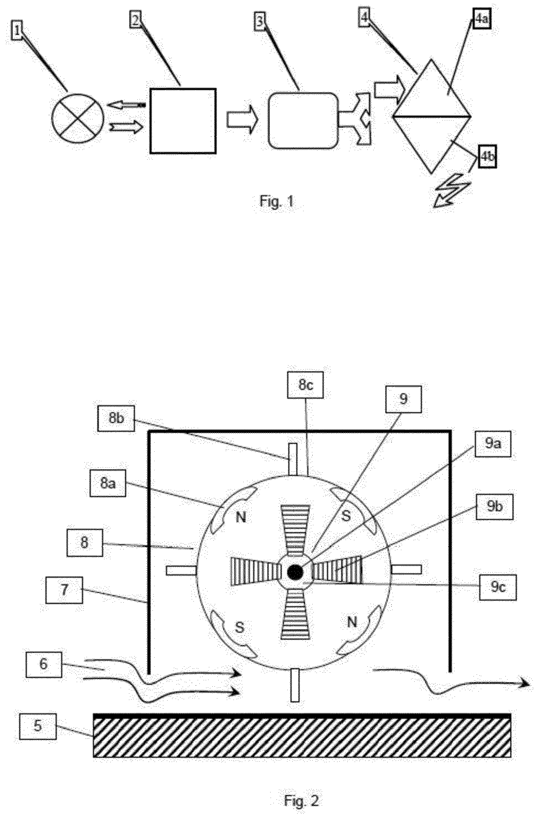

The present invention is described in detail with reference to Fig.1 and Fig. 2.

### [Best Mode]

An electric generator for electric vehicles comprising a wind turbine electrically connected to the battery, the wind turbine mechanism housing (7) being permanently connected to the stator main axis (9a) and mounted on a base (5), the entire stator (9) being mounted on the main axis (9a) mounted stationary inductors (9b) and stator ring (9c), housing (7) also mounted rotor (8) rotating around stationary main axis (9a) and elements mounted thereon, mounted on inner side of rotor housing (8c) polarity N and S magnets (8a), rotor blades (8b) mounted on the outside of the rotor housing (8c) to concentrate the pressure of the air stream (6), wires from the inductor coil (9c) to the wind turbine outlet (9c); 1) connecting it to the inverter (2) while the inverter (2) is connected to the battery compartment charging switch (3) having a the battery section (4a) and the battery section (4a) which supply the electric motors

The mode of operation of the generator for electric cars, which includes the conversion of wind energy into electricity, when the air flow pressure reaches a critical value in the wind turbine, the rotor (8) begins to rotate around the stator (9). 1) the induced electric current is fed to the converter (2) for separating the electric currents and supplying only part of the power to the battery charging line, the other part being fed back to the generator to compensate for the loss of electricity; 3) by which only the battery compartment (4a) which is not used for power supply to the electric motors of the car is charged, when the active battery compartment (4b) supplying electric motors is discharged, the switching element (3) automatically switches the power supply from the previously charged and the loading line to the unloaded section for loading. The generator stops working when the battery is fully charged or when a car is connected to charging station.

Airflow pressure is concentrated in the rotor blades, which results in more efficient energy use by concentrating all the pressure at the blade edge.

In accordance with the foregoing, various modifications may be made to the person skilled in the art as defined in the operating mode within the scope of the present invention.

## Claims

1. An electric generator for electric vehicles comprising a wind turbine electrically connected to a battery, **characterized in that** the wind turbine mechanism housing (7) is stationary connected to the stator main axis (9a) and mounted on a base (5), the whole being mounted on the main axis (9a) a stator (9) having a stationary inductor (9b) and a stator ring (9c), the housing (7) also having a rotor (8) rotating around a stationary main axis (9a) and elements mounted thereon, on a rotor housing (8c) two-pole N and S magnets (8a) internally mounted, rotor blades (8b) mounted on the outside of the rotor housing (8c) to concentrate the pressure of the air stream (6) and wires of inductor coils in the stator ring (9c) to the terminals from the wind turbine (1) connecting it to the inverter (2) while the inverter (2) is connected to the battery compartment a switching element (3) having a connection to a rechargeable battery compartment (4a) and to an electric motor powered battery compartment (4a).

2. A method of operating a generator for electric vehicles comprising converting wind energy into electricity, **characterized in that** the rotor (8) begins to rotate around the stator (9) when the air flow pressure reaches a critical value in the wind turbine, generating a variable magnetic field in the inductors (9b). this current, generated in the wind turbine (1), is fed to the converter (2) to separate the power flows and feed only part of the energy into the battery charging line, the rest being fed back to the generator to compensate for the loss of electricity. the battery compartment charge switching element (3), by which only the battery compartment (4a) which is not used for power supply to the electric motors of the car is charged, the switching element (3) automatically switches when the active battery compartment (4b) supplying electric motors is discharged a power supply from the previously loaded section and the loading line to the unloaded section for loading. The generator stops working when the battery is fully charged or when a car is connected to charging station.

## Amended claims

### Amended claims in accordance with Rule 137(2) EPC.

1. An electric generator for electric vehicles comprising a battery bank having one or more batteries capable of storing an electric charge, a housing that extends concentrically about the shaft, the housing fixed relative to the shaft and the shaft rotates relative to the housing, a movable member includes a fan, an air inlet for directing incoming air towards the fan, a control system comprises a processor configured to control the air inlet to move to an open position and to a closed position, at least one of an accelerometer configured to provide vehicle information to the processor, **characterized in that** the wind turbine mechanism housing or shell (7) is stationary connected to the stator main axis (9a) and mounted on a base (5), the whole stator (9) being mounted on the main axis (9a), the stator (9) having a stationary inductor (9b) and a stator ring (9c), the housing (7) also having a rotor (8) rotating around a stationary main axis (9a) and elements mounted thereon, on a rotor housing (8c) inner side internally mounted two-pole N and S magnets (8a), and rotor blades (8b) mounted on the outer side of the rotor housing (8c) to concentrate the pressure of the air stream (6) and inductor coils wires inside the stator ring (9c) to the terminals from the wind turbine (1) connecting it to the converter (2) while the converter (2) is connected to a battery compartment switching element (3) having a connection to a rechargeable battery compartment (4a) and to a battery compartment which powered electric motor/motors (4b).

2. A method of operating a generator for electric vehicles comprising converting wind energy into electricity, providing the movable member included a fan, and controlling of the exposure of the movable member to an external force includes opening an air inlet at least during vehicle deceleration and closing the air inlet at least during vehicle acceleration, **characterized in that** the rotor (8) begins to rotate around the stator (9) when the air flow pressure reaches a critical value in the wind turbine, generating a variable magnetic field in the inductors (9b), this current, generated in the wind turbine (1), is fed to the converter (2) to separate the power flows and feed only part of the energy into the battery charging line the rest part being feed back to the generator to compensate for the losses of electricity; the battery compartment charge switching element (3), directing charging only to the battery compartment (4a) which is not used for power supply to the electric motor/motors of the car, the switching element (3) automatically switches when the active battery compartment (4b) supplying electricity for the motors from the previously charged section and the loading line switched to the unused and not fully charged section, the generator stops working when the battery is fully charged or when a car is connected to charging station.
